# FASCICULE DE BREVET EUROPEEN

(11) **EP 2 796 684 B1**
(45) Date de publication et mention de la délivrance du brevet: **17.01.2018**
(21) Numéro de dépôt: 14160705.1
(22) Date de dépôt: 19.03.2014
(51) Int. Cl.: F01N 3/20, B01F 5/04, B01F 5/02, B01F 15/06, B01F 5/06, B01F 3/04, F01N 3/28

(54) **Dispositif mélangeur, système et procédé de decomposition d'une solution d'urée dans un tel dispositif mélangeur**
Mischvorrichtung, System und Verfahren zur Zersetzung einer Harnstofflösung in einer solchen Mischvorrichtung
Mixing device, system and method for decomposing an urea solution in such a mixing device

(30) Priorité: 23.04.2013 FR 1353676
(43) Date de publication de la demande: 29.10.2014
(73) Titulaire: PSA Automobiles SA, 78300 Poissy (FR)
(72) Inventeur: Artault, Mathieu, 92700 Colombes (FR); Jumel, Guillaume, 78290 Croissy sur Seine (FR)

(56) Documents cités:
- EP-A1- 2 386 738
- WO-A1-2008/034981
- DE-U1-202012 011 764
- US-A1- 2003 070 424

## Description

L'invention concerne le domaine de la dépollution des gaz d'échappement d'un moteur thermique.

Plus particulièrement, l'invention se rapporte à un dispositif mélangeur destiné à être intégré dans une ligne d'échappement d'un moteur thermique, en amont d'un catalyseur de réduction sélective SCR. L'invention se rapporte en outre à un système et à un procédé de décomposition d'une solution d'urée injectée dans un tel dispositif mélangeur. L'invention se rapporte enfin à un véhicule automobile comprenant un tel système de décomposition d'urée et à un programme d'ordinateur.

Les émissions polluantes, des moteurs thermiques équipant notamment les véhicules automobiles, sont règlementées par des normes de plus en plus sévères. Les polluants règlementés sont notamment le monoxyde de carbone (CO), les hydrocarbures imbrûlés (HC), les oxydes d'azote (NOx), et les particules.

Les normes successives applicables pour les moteurs diesel en Europe, définissent des niveaux d'émission de polluants tolérés qui sont les suivants :

| Norme | NOx | HC + NOx |
|---|---|---|
| EURO 4 (mg/km) | 250 | 300 |
| EURO 5 (mg/km) | 180 | 230 |
| EURO 6 (mg/km) | 80 | 170 |

Pour satisfaire ces normes, il est connu d'employer un certain nombre de moyens de dépollution dans la ligne d'échappement des moteurs thermiques. Ainsi, par exemple, un catalyseur d'oxydation permet de traiter le monoxyde de carbone et les hydrocarbures imbrûlés, tandis qu'un filtre à particules est utilisé pour filtrer les particules de suies.

On connait également des moyens spécifiques pour traiter les oxydes d'azote ou NOx, tels que les pièges à NOx ou les catalyseurs de réduction sélective, dits SCR (acronyme anglais pour « Selective Catalytic Réduction »). Ces catalyseurs se présentent sous forme d'un filtre et permettent de réduire les oxydes d'azote NOx par l'ajout d'un agent réducteur dans les gaz d'échappement. L'agent réducteur classiquement utilisé est l'ammoniac (NH₃), obtenu par dissociation de l'urée de synthèse en solution aqueuse à 32,5%, commercialisée sous la marque « AdBlue », injectée dans la ligne d'échappement en amont du catalyseur SCR.

Les réactions impliquées dans la dissociation de l'urée sont les suivantes :

(NH₂)₂CO → HNCO + NH₃

: pyrolyse à 120°C

HNCO + H₂O → CO₂ + NH₃

: hydrolyse à 180°C

Le catalyseur SCR sert à favoriser la réduction des oxydes d'azotes NOx par l'agent réducteur obtenu, c'est - à - dire l'ammoniac NH₃ issu de la dissociation de l'urée, selon les réactions suivantes :

NH₃ + 4NO + O₂ → 4N₂ + 6 H₂O

: réaction rapide

NH₃ + NO + NO₂ →2N₂ + 3 H₂O

: réaction très rapide à environ 200°C

8NH₃ + 6NO₂ → 7N₂ + 12 H₂O

: réaction lente

Pour pouvoir traiter le plus d'oxydes d'azotes NOx possible, il faut injecter l'urée le plus tôt possible. Par conséquent, classiquement l'injection d'urée dans la ligne d'échappement est ordonnée dès lors que la température des gaz d'échappement atteint un seuil de température de 175°C, permettant tout juste d'assurer une dissociation de l'urée.

Pour permettre une décomposition optimale de la solution d'urée et une bonne dispersion de l'agent réducteur obtenu, dans les gaz d'échappement, un dispositif mélangeur est intégré dans la ligne d'échappement, en amont du catalyseur SCR. Le dispositif mélangeur comprend une chambre de mélange pourvue d'une entrée et d'une sortie par lesquelles s'écoulent les gaz d'échappement. Les gaz d'échappement sont mélangés à la solution aqueuse d'urée, injectée par un orifice qui communique avec la chambre de mélange. La solution aqueuse d'urée est injectée au moyen d'une pompe doseuse à une pression de l'ordre de 5 bars, par l'intermédiaire d'un injecteur spécifique, dans le dispositif mélangeur. Le jet d'urée est projeté contre des impacteurs répartis au sein de la chambre de mélange. Le jet d'urée est alors atomisé en très fines gouttelettes. L'urée se décompose thermiquement en ammoniac NH₃ et dioxyde de carbone CO₂ dans le mélangeur au contact des gaz d'échappement dont la température est supérieure à la température seuil (175°C) de dissociation de l'urée. Le dispositif mélangeur permet aussi de bien disperser l'ammoniac obtenu, dans les gaz d'échappement, afin d'avoir un mélange homogène. Plus la solution d'urée est injectée sous forme de vapeur dans le dispositif mélangeur et plus le mélange entre les gaz d'échappement et l'agent réducteur obtenu NH₃ est homogène, et donc plus l'efficacité de la réaction de réduction des oxydes d'azote est importante.

Un inconvénient du dispositif mélangeur actuel réside dans le fait que dans certaines conditions, telles que par exemple des phases froides de fonctionnement du moteur et/ou lorsque le débit des gaz d'échappement est important, la solution d'urée injectée dans le dispositif mélangeur a tendance à moins bien se décomposer. Par conséquent, l'efficacité de la réduction ultérieure des oxydes d'azote par l'ammoniac, dans le catalyseur SCR, s'en trouve réduite. De plus, des cristaux peuvent se former sur les parois froides de la chambre de mélange ou sur les impacteurs. Ces cristaux sont des cristaux d'acide cyanurique C₃H₃N₃O₃ formés à partir de trois molécules d'acide isocyanique HNCO issu de la dissociation partielle de l'urée. On obtient alors un dépôt solide sur les parois internes de la chambre de mélange du dispositif mélangeur mais aussi sur la ligne d'échappement en aval de ce dispositif mélangeur. Un tel encrassement diminue lui aussi l'efficacité de la dépollution.

Pour pallier ce problème de dépôt et éviter qu'il apparaisse, il existe des solutions qui consistent à chauffer une partie de la ligne d'échappement. Ainsi, le document US 20090107119 décrit par exemple l'utilisation d'un réchauffeur additionnel placé sur la ligne d'échappement, à proximité ou autour du point d'injection de la solution d'urée. Le réchauffeur comprend plusieurs éléments chauffants qui sont commandés par un moyen de pilotage en fonction des conditions de fonctionnement du moteur thermique, telles que par exemple la température des gaz d'échappement et / ou le débit des gaz d'échappement. Ainsi, selon les conditions de fonctionnement du moteur, le moyen de pilotage détermine les risques de formation de dépôt et, en fonction de ces risques, il commande une chauffe plus ou moins importante du réchauffeur. Cependant, ce document ne décrit pas la manière dont les facteurs de risques de formation de dépôt sont déterminés, et il ne décrit donc pas non plus comment la puissance de chauffage du réchauffeur est modulée en fonction de ces facteurs de risques. Il est également connu du document WO 2008/034981 un dispositif de contrôle de la pollution d'un moteur à combustion interne d'un véhicule automobile, du type qui comprend une ligne d'échappement munie d'un dispositif pour libérer un composant liquide et un dispositif aval pour évaporer ledit composant qui comprend au moins une présentant une partie courbée et destinée à provoquer un écoulement tourbillonnaire du mélange constitué de gaz d'échappement et du composant vaporisé. Il est enfin connu du document EP 2 386 738 Un système SCR comprenant plaque, un doseur d'agent de réduction et un catalyseur. Une plaque cible est positionnée transversalement au flux d'agent réducteur et dirige un flux de gaz d'échappement dans une direction radialement vers l'extérieur. Un déflecteur est positionné en aval de la plaque cible et comprend une ouverture pour diriger un flux de gaz d'échappement dans une direction radialement vers l'intérieur. Une plaque de diffusion est située en aval du déflecteur en amont du catalyseur.

L'invention a donc pour but de remédier à au moins un des inconvénients de l'art antérieur. En particulier, l'invention vise à améliorer la dissociation de la solution d'urée au sein du dispositif mélangeur et à améliorer la dispersion de l'agent réducteur, issu de cette dissociation, dans les gaz d'échappement, afin d'améliorer l'efficacité de la réduction des oxydes d'azote dans le catalyseur SCR et d'éviter la formation de dépôt d'encrassement dans le dispositif mélangeur et dans la ligne d'échappement située en aval.

A cet effet, l'invention a pour objet un dispositif mélangeur destiné à être intégré dans une ligne d'échappement d'un moteur thermique, en amont d'un catalyseur de réduction sélective SCR, ledit dispositif mélangeur comprenant une chambre de mélange, pourvue d'une entrée et d'une sortie pour permettre un écoulement des gaz d'échappement, et un orifice, communiquant avec ladite chambre de mélange, par lequel est injectée une solution d'urée, sous forme d'un jet projeté sur des impacteurs répartis au sein de ladite chambre de mélange, ledit dispositif mélangeur étant caractérisé en ce qu'il comprend en outre :
- une grille disposée sur ladite sortie de ladite chambre de mélange, et
- des éléments chauffants intégrés respectivement aux impacteurs et à ladite grille.

Ainsi, le dispositif mélangeur comprend différentes pièces qui peuvent être chauffées indépendamment les unes des autres afin d'améliorer la décomposition thermique de la solution d'urée selon les conditions de fonctionnement du moteur.

Selon une autre caractéristique optionnelle du dispositif, les éléments chauffants sont constitués par l'un au moins des moyens suivants : résistances chauffantes, fils chauffants.

L'invention porte en outre sur un système de décomposition d'une solution d'urée en agent réducteur, ledit agent réducteur étant destiné à traiter des oxydes d'azote NOx contenus dans les gaz d'échappement issus d'un moteur thermique, ledit système étant caractérisé en ce qu'il comprend : un dispositif mélangeur tel que décrit ci-dessus, et un module de contrôle apte à comparer une température mesurée des gaz d'échappement à au moins une première valeur seuil et, dès lors que la température mesurée est supérieure à ladite première valeur seuil, à chauffer, de manière indépendante, les impacteurs et la grille dudit dispositif de mélange avec une puissance modulée en fonction de la température mesurée des gaz d'échappement et d'une valeur déterminée du débit des gaz d'échappement, la puissance de chauffe des impacteurs étant augmentée lorsque la température mesurée et le débit des gaz d'échappement diminuent, et la puissance de chauffe de la grille étant augmentée lorsque la température diminue et que le débit des gaz d'échappement augmente.

Ainsi, le système permet de réguler de manière indépendante la puissance de chauffe des différentes pièces du dispositif mélangeur, en fonction des conditions de fonctionnement du moteur thermique et notamment de la température et du débit des gaz d'échappement.

Selon d'autres caractéristiques optionnelles du système :
- le module de contrôle est en outre apte à déterminer des valeurs minimum et maximum de puissance de chauffe respectivement des impacteurs et de la grille en fonction de la température mesurée, à comparer la valeur du débit des gaz d'échappement à au moins une valeur seuil et, lorsque le débit est inférieur à ladite au moins une valeur seuil, à régler la puissance des impacteurs sur la valeur maximum prédéterminée et la puissance de chauffe de la grille sur la valeur minimum prédéterminée, et inversement lorsque le débit devient supérieur à ladite au moins une valeur seuil, à régler la puissance de chauffe des impacteurs sur la valeur minimum prédéterminée et la puissance de chauffe de la grille sur la valeur maximum prédéterminée.
- le système comprend en outre un module estimateur apte à estimer le débit des gaz d'échappement à partir d'au moins une valeur du régime moteur.

L'invention porte également sur un véhicule automobile comprenant le système de décomposition d'une solution d'urée qui vient d'être décrit.

L'invention porte encore sur un procédé de décomposition d'une solution d'urée au sein d'un dispositif mélangeur intégré dans une ligne d'échappement d'un moteur thermique en amont d'un catalyseur de réduction sélective (SCR), ledit procédé étant caractérisé en ce qu'il est mis en oeuvre avec ledit dispositif mélangeur conforme à celui décrit ci-dessus, et en ce qu'il comprend les étapes suivantes :
- mesurer une température des gaz d'échappement,
- déterminer un débit des gaz d'échappement,
- comparer ladite température mesurée à au moins une valeur seuil, et
- lorsque ladite température mesurée est supérieure à ladite valeur seuil, chauffer, de manière indépendante, les impacteurs et la grille dudit dispositif mélangeur avec une puissance modulée en fonction de la température mesurée et du débit déterminé, la puissance de chauffe des impacteurs étant augmentée lorsque la température et le débit diminuent, et la puissance de chauffe de la grille étant augmentée lorsque la température diminue et que le débit augmente.

Selon d'autres caractéristiques optionnelles du procédé :
- le procédé comprend en outre les étapes suivantes : comparer la température mesurée des gaz d'échappement à au moins une deuxième valeur seuil supérieure à la première valeur seuil ; déterminer des valeurs minimum et maximum de puissance de chauffe respectivement des impacteurs et de la grille dans la plage de températures comprise entre les deux valeurs seuil ;comparer la valeur de débit à au moins une valeur seuil ; activer le chauffage des impacteurs et de la grille dès lors que la température mesurée est comprise entre les deux valeurs seuils de température, et lorsque le débit est inférieur à ladite au moins une valeur seuil de débit, régler la puissance des impacteurs sur la valeur maximum prédéterminée et la puissance de chauffe de la grille sur la valeur minimum prédéterminée, et inversement lorsque le débit devient supérieur à ladite au moins une valeur seuil de débit, régler la puissance de chauffe des impacteurs sur la valeur minimum prédéterminée et la puissance de chauffe de la grille sur la valeur maximum prédéterminée.

- le procédé comprend en outre les étapes suivantes : comparer la température mesurée des gaz d'échappement à au moins une autre valeur seuil, intermédiaire entre les valeurs seuil inférieure et supérieure ; dès lors que la température est supérieure à ladite valeur seuil intermédiaire, abaisser les valeurs prédéterminées minimum et maximum de puissance de chauffe respectivement des impacteurs et de la grille.
- le procédé comprend en outre les étapes suivantes : comparer la valeur de débit à au moins deux valeurs seuil basse et haute et, dès lors que le débit est inférieur à ladite valeur seuil basse, la puissance de chauffe des impacteurs est réglée sur la valeur maximum préalablement déterminée en fonction de la température mesurée, tandis que la puissance de chauffe de la grille est réglée sur la valeur minimum préalablement déterminée en fonction de la température mesurée ; dès lors que le débit est supérieur à ladite valeur seuil haute, la puissance de chauffe des impacteurs est réglée sur la valeur minimum préalablement déterminée en fonction de la température mesurée, tandis que la puissance de chauffe de la grille est réglée sur la valeur maximum préalablement déterminée en fonction de la température mesurée, lorsque le débit est intermédiaire entre les deux valeurs seuils, les puissances de chauffe des impacteurs et de la grille sont respectivement réglées sur une valeur supérieure ou égale à la valeur minimum préalablement déterminée en fonction de la température mesurée.
- le débit des gaz d'échappement est déterminé par une mesure, au moyen d'un capteur disposé dans la ligne d'échappement, en amont du dispositif mélangeur ou par une estimation, au moyen d'un module estimateur qui estime le débit à partir d'au moins une valeur du régime moteur.

L'invention porte enfin sur un programme d'ordinateur comprenant des instructions de code de programme pour l'exécution des étapes du procédé de décomposition d'une solution d'urée qui vient d'être décrit, lorsque ledit programme est exécuté par un processeur.

D'autres particularités et avantages de l'invention apparaitront à la lecture de la description suivante faite à titre d'exemple illustratif et non limitatif, en référence aux Figures annexées qui représentent :
- La Figure 1, un schéma d'un exemple d'architecture d'une ligne d'échappement d'un moteur thermique comprenant un moyen de dépollution de type SCR compact liquide,
- La Figure 2, un schéma de principe, en perspective éclatée, d'un dispositif mélangeur,
- La Figure 3, un schéma d'un système de décomposition d'une solution d'urée comprenant un dispositif mélangeur conforme à celui de la Figure 2,
- La Figure 4, un schéma synoptique des étapes d'un procédé de décomposition d'une solution d'urée selon l'invention.

Par oxydes d'azote NOx, on entend notamment les oxydes du type protoxyde N₂O, sesquioxyde N₂O₃, pentoxyde N₂O₅, monoxyde NO, et dioxyde NO₂.

Dans la suite de la description, on parle indifféremment de « dissociation » ou de « décomposition » pour décrire le phénomène thermique consistant à casser certaines liaisons chimiques de la molécule d'urée pour donner de l'ammoniac et du dioxyde de carbone.

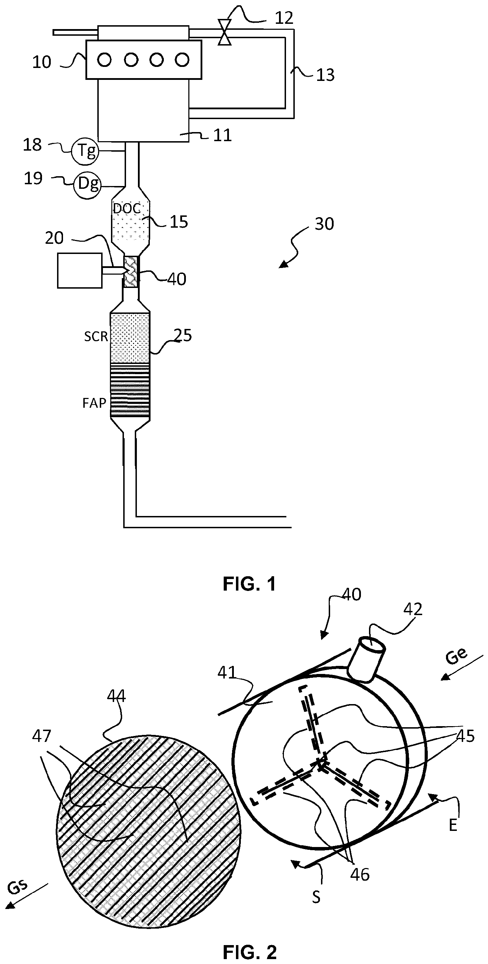

La présente invention s'adapte à tout type d'architecture de ligne d'échappement comprenant un catalyseur SCR. Elle est particulièrement bien adaptée aux lignes d'échappement comprenant un moyen de dépollution dit « SCR compact liquide » dans lequel tous les éléments de dépollution sont rapprochés les uns des autres. Une telle ligne d'échappement, référencée 30, est représentée très schématiquement sur la Figure 1. Sur cette figure, on a représenté de manière très schématique un moteur thermique 10 ayant à titre d'exemple 4 cylindres, une chambre de combustion 11, un système EGR (acronyme anglais pour « Exhaust Gas Recirculation ») de recirculation des gaz d'échappement dans la chambre de combustion 11 comprenant un échangeur thermique 13 et une vanne EGR 12. La présence de ce système EGR n'est pas indispensable. A la sortie de la chambre de combustion 11, les gaz d'échappement passent dans un catalyseur d'oxydation 15 DOC (acronyme anglais pour « Diesel Oxydation Catalyst ») dont le rôle premier est d'oxyder le monoxyde de carbone contenu dans les gaz en sortie de moteur, en dioxyde de carbone moins toxique pour la santé. Ce catalyseur DOC permet aussi de traiter les hydrocarbues HC.

En aval de ce catalyseur DOC 15 les gaz d'échappement traversent un autre catalyseur 25 comprenant un substrat unique utilisé pour le catalyseur de réduction sélective SCR et pour le filtre à particules FAP. L'emploi d'un substrat unique pour faire filtre à particules et porter une imprégnation catalytique, encore dénommée « washcoat », pour la réduction sélective SCR des oxydes d'azote, permet la réalisation de ces fonctions dans un volume nettement moindre qu'en employant deux substrats séparés. Ainsi, le moyen de dépollution est optimisé en termes d'encombrement, de masse et de prix de revient. La présence de ce catalyseur 25 implique la présence d'un injecteur d'urée 20 et d'un dispositif mélangeur 40, situés en amont de ce catalyseur 25 SCR et FAP, pour injecter une solution d'urée. La solution d'urée injectée dans le mélangeur 40 est décomposée en ammoniac NH₃, agent réducteur des oxydes d'azotes NOx, qui est alors mélangé et dispersé dans les gaz d'échappement.

La présente invention s'adapte à tout type de mélangeur comprenant des impacteurs pour atomiser la solution d'urée. Le mélangeur peut donc présenter une forme cylindrique, ou coudée, ou en U par exemple. L'utilisation d'un mélangeur du type imposant au gaz d'échappement un cheminement hélicoïdal, est particulièrement adapté à l'invention. Ce type de mélangeur est compact et permet, par l'obtention d'une distance de parcours des gaz d'échappement supérieure à ses propres dimensions, l'emploi d'une solution à base d'urée en tant que précurseur d'ammoniac, alors même que l'hydrolyse de l'urée dans les gaz d'échappement nécessite un temps non négligeable.

La Figure 2 schématise de manière très simplifiée, en perspective éclatée, le principe d'un tel dispositif mélangeur 40. Ce dispositif comprend une chambre de mélange 41 pourvue d'une entrée E et d'une sortie S raccordées sur la ligne d'échappement, et par lesquelles s'écoulent les gaz d'échappement, selon les flèches Ge et Gs. Les gaz d'échappement traversent ainsi la chambre de mélange 41. Un orifice 42 communique avec la chambre de mélange 41 et permet d'y raccorder un injecteur. Cet injecteur est relié à une pompe doseuse, non représentée, afin d'injecter la solution aqueuse d'urée à une pression de 5 bars. Des impacteurs 46 sont avantageusement répartis au sein de la chambre de mélange 41. Ces impacteurs 46 se présentent par exemple sous forme de lames métalliques. Trois impacteurs sont représentés en traits pointillés sur la Figure 2, mais ils peuvent être plus ou moins nombreux. Ces impacteurs permettent, lorsque la solution d'urée est injectée, de casser le jet d'urée et d'atomiser la solution d'urée en très fines gouttelettes. Ces fines gouttelettes sont ensuite mélangées aux gaz d'échappement qui présentent une température supérieure à la température seuil de dissociation de l'urée (c'est-à-dire 175°C), de sorte que les fines gouttelettes sont décomposées pour former l'ammoniac (agent réducteur des oxydes d'azote) et du dioxyde de carbone. L'ammoniac est alors mélangé aux gaz d'échappement, et le mélange sort du dispositif mélangeur 40, selon la flèche Gs, pour aller vers le catalyseur SCR où les oxydes d'azotes sont réduit grâce à l'ammoniac.

De manière avantageuse, des éléments chauffants 45 sont intégrés aux impacteurs 46. Ces éléments chauffants peuvent se présenter sous forme de résistances ou de fils chauffants qui sont noyés dans les impacteurs ou fixés dessus. Ainsi, lorsque la chambre de mélange n'est pas assez chaude, ou trop froide, pour une décomposition efficace de l'urée, les impacteurs 46 peuvent être chauffés afin d'améliorer la dissociation de l'urée en ammoniac, au moment de son atomisation.

De même, une grille chauffante 44 est avantageusement disposée sur la sortie S du dispositif mélangeur 40. Cette grille 44 peut par exemple être réalisée à partir d'un réseau de fils métalliques, représentés en traits grisés sur la Figure 2, intégrant des éléments chauffants 47 représentés en traits noirs sur la Figure 2, tels que des résistances chauffantes ou des fils chauffants par exemple. Ainsi, lorsque les parois de la chambre de mélange 41 ne sont pas à une température suffisante pour permettre une décomposition efficace de l'urée, la grille 44 permet non seulement d'atomiser en fines gouttelettes l'urée restante dans le mélange de gaz sortant, mais aussi de la chauffer simultanément afin de dissocier thermiquement les fines gouttelettes d'urée et d'obtenir de l'ammoniac.

Les injections de la solution d'urée dans le dispositif mélangeur 40 sont commandées uniquement lorsque les gaz d'échappement on atteint le seuil de température de dissociation de l'urée, afin que l'urée, stockée à l'arrière du véhicule, soit décomposée en ammoniac NH3. La réduction des oxydes d'azote NOx se réalise ensuite sur le catalyseur SCR en présence de l'agent réducteur NH3 obtenu et de température.

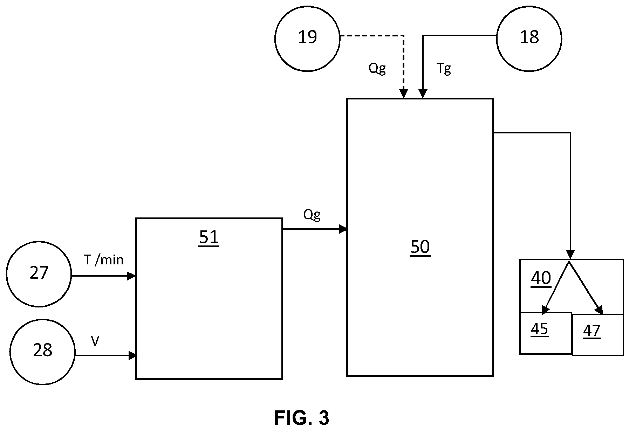

La Figure 3 schématise de manière très simplifiée un système de décomposition d'une solution d'urée en agent réducteur, destiné au traitement des oxydes d'azote NOx dans le catalyseur SCR situé en aval dans la ligne d'échappement. Ce système comprend un dispositif mélangeur 40 conforme à celui qui vient d'être décrit, et un module de contrôle 50. Le module de contrôle 50 peut être réalisé sous forme d'un processeur convenablement programmé. Un ensemble d'instructions logicielles permet au processeur d'effectuer différentes opérations décrites dans ce qui suit en relation avec le module de contrôle.

Le module de contrôle 50 permet de commander, en fonction de certains paramètres, le chauffage des éléments chauffants 45, 47 implantés respectivement dans ou sur les impacteurs 46 de la chambre de mélange 41 du dispositif mélangeur 40, et dans la grille 44 disposée sur la sortie S du dispositif mélangeur 40. De manière avantageuse, les impacteurs 46 et la grille 44 peuvent être chauffés de manière indépendante, et leur puissance de chauffe peut également être modulée de manière indépendante.

Pour déterminer à quel moment et à quelle puissance chauffer les éléments chauffants 45, 47 respectivement des impacteurs 46 et de la grille 44, le module de contrôle 50 se base notamment sur la température Tg des gaz d'échappement, mesurée en amont du dispositif mélangeur ainsi que sur le débit Qg des gaz d'échappement déterminé en amont du dispositif mélangeur. Pour cela, un capteur de température 18 est disposé dans la ligne d'échappement, en amont du dispositif mélangeur 40, afin de mesurer la température Tg des gaz d'échappement en amont de ce dispositif.

Le débit Qg des gaz d'échappement, quant - à lui, peut être mesuré ou estimé. S'il est mesuré, un débitmètre 19 est disposé dans la ligne d'échappement, en amont du dispositif mélangeur 40. La présence d'un tel débitmètre n'est cependant pas indispensable, la valeur du débit des gaz d'échappement pouvant être estimée. Dans ce cas, un module estimateur 51 permet, à partir de données mesurées par des capteurs 27, 28, d'estimer le débit Qg des gaz d'échappement en amont du dispositif mélangeur 40. Pour faire son estimation, le module estimateur 51 tient compte au moins du régime moteur, c'est-à-dire de la vitesse de rotation du moteur exprimée en tours /minutes (t/min). Le module estimateur peut en outre tenir compte de la vitesse v de véhicule, ou de la température Tg des gaz d'échappement par exemple.

Le module de contrôle 50 permet ensuite de comparer les valeurs de température Tg mesurée et de débit Qg estimé ou mesuré, qu'il reçoit respectivement du capteur 18 et du module estimateur 51, ou du débitmètre 19, à des valeurs seuils, afin de déterminer quelles sont les pièces, du dispositif mélangeur 40, qu'il faut chauffer et à quelle puissance. Le module de contrôle 50 détermine en effet s'il faut chauffer les impacteurs 46 et/ou la grille 44 de sortie, et à quelle puissance il est nécessaire de les chauffer pour assurer une décomposition optimale de l'urée.

Il est connu que plus la température Tg des gaz d'échappement est élevée et meilleure est la dissociation thermique de l'urée. Ainsi, en dessous d'une première valeur seuil TS1, dite inférieure, de 175°C, l'urée ne se décompose pas. Au-dessus d'une deuxième valeur seuil TS3, dite supérieure, de l'ordre de 275°C, les gaz d'échappement sont suffisamment chauds pour assurer une décomposition optimale de l'urée.

Entre ces deux valeurs seuils inférieure TS1, et supérieure TS3, la température des gaz d'échappement est supérieure au seuil thermique de décomposition de l'urée, mais pas suffisante pour assurer une décomposition optimale de l'urée. Lorsque la température Tg des gaz se situe dans cette plage de valeurs, elle est considérée comme étant une température froide aux yeux des moyens de dépollution. Dans ce cas, les gaz d'échappement ne permettent pas par exemple de chauffer correctement les parois de la chambre de mélange 41 du dispositif mélangeur 40 ou les impacteurs 46, si bien que lorsque la solution d'urée est injectée dans la chambre de mélange, le jet d'urée peut frapper des parois insuffisamment chaudes pour assurer une décomposition optimale de l'urée.

Le module de contrôle 50 envoie donc des ordres de chauffage et commande, de manière indépendante, la puissance de chauffe des différents éléments chauffants 45, 47 implantés respectivement dans les impacteurs 46 et dans la grille 44 de sortie.

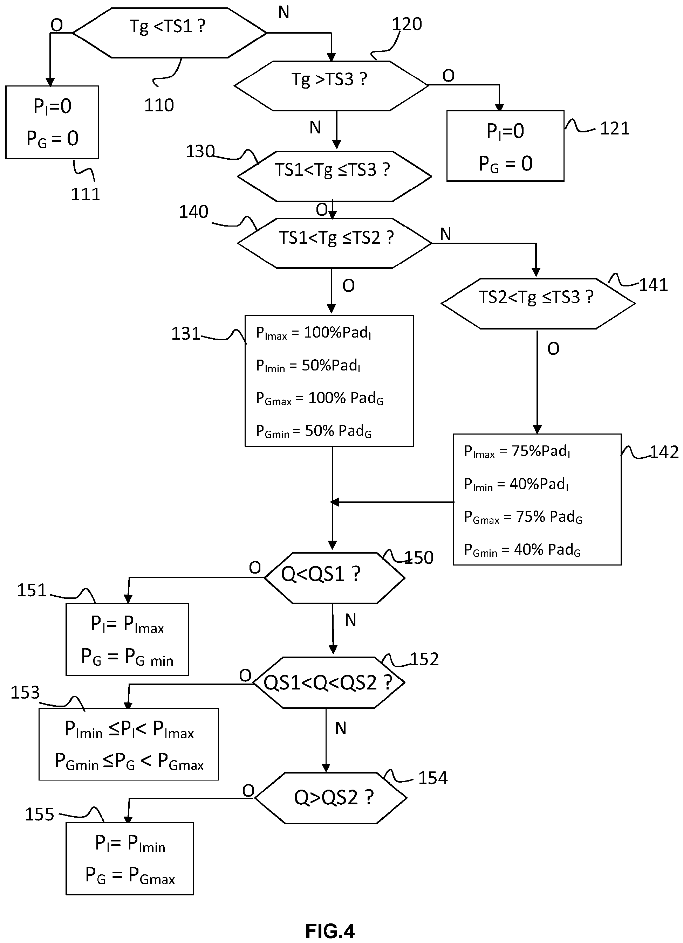

Pour mieux comprendre le fonctionnement de ce système, la Figure 4 illustre les étapes mises en oeuvre dans le procédé de décomposition d'une solution d'urée en agent réducteur pour le traitement des oxydes d'azote. Après avoir reçu la mesure de la température Tg des gaz d'échappement mesurée par le capteur 18, et après avoir reçu la valeur mesurée ou estimée du débit Qg des gaz d'échappement, le module de contrôle 50 compare la température mesurée Tg à au moins une valeur seuil TS1 (étape 110). Cette première valeur seuil TS1 est la valeur seuil de dissociation de l'urée, de 175°C. En dessous de cette première valeur seuil TS1, aucune injection d'urée ne peut être effectuée dans le mélangeur puisque le seuil pour sa dissocation n'est pas atteint. Par conséquent, dans ce cas, les éléments chauffants des impateurs 46 ou de la grille 44 de sortie ne sont pas activés, et leur puissance de chauffe PI, PG est donc nulle (étape 111).

De même, lorsque la température Tg des gaz d'échappement est dite chaude car suffisante pour permettre une décomposition optimale de l'urée, c'est-à-dire supérieure à une deuxième valeur seuil TS3, fixée par exemple à 275°C, (étape 120) il n'est plus nécessaire de chauffer les impacteurs 46 ni la grille 44 de sortie puisque les gaz d'échappement sont suffisamment chauds pour assurer la dissociation complète de l'urée. Dans ce cas encore, les éléments chauffants 45, 47 des impacteurs 46 et de la grille 44 ne sont pas activés et la puissance de chauffe PI, PG respectivement des impacteurs et de la grille est donc nulle (étape 121).

En revanche, entre ces deux valeurs seuils inférieure TS1 et supérieure TS3, la température Tg des gaz, bien que supérieure au seuil de dissociation de l'urée, n'est pas encore assez chaude pour assurer une dissociation optimale de l'urée.

Lorsque la température mesurée Tg des gaz d'échappement se situe entre les deux valeurs seuil inférieure TS1 et supérieure TS3, le module de contrôle 50 active donc une mise en chauffe des impacteurs 46 et de la grille 44 de sortie. De manière avantageuse, les impacteurs 46 et la grille 44 sont chauffés de manière indépendante. Pour cela, le module de contrôle 50 régule la puissance de chauffe PI, PG respectivement des impacteurs 46 d'une part et de la grille 44 d'autre part, entre une puissance minimum PImin, PGmin et une puissance maximum PImax, PGmax qui sont préalablement déterminées.

Ainsi, lorsque la température mesurée Tg est comprise entre la valeur seuil inférieure TS1 et la valeur seuil supérieure TS3, il est nécessaire de chauffer les impacteurs et la grille avec une puissance de chauffe adaptée pour chacun d'eux. Pour la plage de température considérée TS1-TS3, des valeurs de puissance minimum PImin, PGmin et maximum PImax, PGmax des impacteurs et de la grille sont préalablement déterminées (étape 131). Ainsi, par exemple, la puissance maximum de la grille et des impacteurs, notée respectivement PGmax et PImax, peut être fixée à 100% de la puissance maximum admissible PadG, Padl délivrable aux éléments chauffants respectivement 47, 45 intégrés respectivement à ladite grille 44 et auxdits impacteurs 46, tandis que la puissance minimum, notée respectivement PGmin et PImin, peut par exemple être fixée à 50% de cette même puissance maximum admissible PadG, Padl délivrable aux éléments chauffants 47, 45.

Après avoir prédéfini ces valeurs de puissances minimum et maximum pour les impacteurs 46 d'une part et la grille 44 d'autre part, le module de contrôle 50 compare la valeur déterminée du débit Qg des gaz d'échappement à au moins une première valeur seuil QS1 (étape 150). Il a en en effet été constaté que plus le débit massique de gaz augmente, meilleure est la décomposition de la solution d'urée. Ainsi, en dessous de cette première valeur seuil QS1, autour de 100kg/h par exemple, le jet d'urée est essentiellement projeté sur les impacteurs 46 du dispositif mélangeur 40 qui atomisent la solution d'urée en très fine gouttelettes. Au-delà de cette valeur seuil QS1, lorsque le débit des gaz augmente, le jet d'urée est partiellement projeté contre la paroi périphérique de la chambre de mélange 41 et atomisé sur les impacteurs 46. Puis, lorsque le débit augmente encore, le jet d'urée ne touche quasiment plus les impacteurs si bien qu'il n'est plus atomisé, mais il touche les parois périphériques de la chambre de mélange.

Ainsi, lorsque le débit des gaz Qg est inférieur à cette première valeur seuil QS1 (étape 150), la puissance de chauffe des impacteurs PI est réglée égale à la valeur maximum Plmax préalablement déterminée à l'étape 131, tandis que la puissance de chauffe de la grille PG est réglée égale à la valeur minimum PGmin préalablement déterminée à l'étape 131. Lorsque le débit augmente et est supérieur à cette valeur seuil QS1, la puissance des impacteurs est diminuée jusqu'à égaler la valeur minimum Plmin préalablement déterminée, tandis que la puissance de chauffe de la grille PG augmente jusqu'à devenir égale à la puissance maximum PGmax préalablement déterminée à l'étape 131.

Pour affiner la modulation de la puissance de chauffe des impacteurs et de la grille, on définit en outre une deuxième valeur seuil, dite valeur seuil haute QS2, supérieure à QS1. Cette valeur seuil haute QS2 correspond avantageusement à la valeur seuil, de l'ordre de 150kg/h, au-delà de laquelle le jet d'urée ne touche quasiment plus les impacteurs 46, si bien qu'il n'est plus atomisé, mais il touche les parois périphériques de la chambre de mélange 41 du dispositif mélangeur.

Ainsi, lorsque le débit est inférieur à la valeur seuil basse QS1, alors la puissance des impacteurs PI est égale à la puissance maximum Plmax préalablement déterminée (étape 131), tandis que la puissance de chauffe PG de la grille est égale à la puissance minimum PGmin préalablement déterminée (étape 131). A ce débit, le jet d'urée étant essentiellement projeté sur les impacteurs, ce sont eux qui sont chauffés au maximum pour pouvoir décomposer thermiquement l'urée.

Lorsque le débit est supérieur à la valeur seuil haute QS2 (étape 154), alors dans ce cas, le jet d'urée est essentiellement projeté sur les parois périphériques du dispositif mélangeur et pas sur les impacteurs. Dans ce cas, il faut donc chauffer essentiellement la grille de sortie 44 qui permettra simultanément d'atomiser et de décomposer thermiquement l'urée restante dans le mélange. Pour cela, la puissance des impacteurs PI est donc égale à la puissance minimum Plmin préalablement déterminée (étapes 155 et 131), tandis que la puissance de chauffe PG de la grille est égale à la puissance maximum PGmax préalablement déterminée (étapes 155 et 131).

Lorsque le débit des gaz se situe entre ces deux valeurs seuil haute et basse, (étape 152), alors la puissance des impacteurs doit être inférieure à la puissance maximum PImax et supérieure ou égale à la puissance minimum Plmin. Il en va de même pour la puissance de la grille qui doit être inférieure à la puissance maximum PGmax et supérieure ou égale à la puissance minimum PGmin (étape 153).

Pour affiner encore la commande de chauffage des impacteurs et de la grille, et éviter une surconsommation électrique lorsqu'il n'y a pas besoin de chauffer les éléments chauffants à une température trop élevée, on définit au moins une autre valeur de température seuil TS2, intermédiaire entre les valeurs seuil supérieure TS3 et inférieure TS1. Cette valeur seuil intermédiaire TS2 peut par exemple être fixée à une température de 220°C, qui est une température à laquelle l'uréese dissocie plus facilement. On définit ainsi deux plages de températures comprises respectivement entre TS1 et TS2 et entre TS2 et TS3 (étapes 140 et 141).

Selon que la température Tg mesurée des gaz d'échappement se situe dans l'une ou l'autre des plages de température, la valeur préalablement déterminée des puissances maximum et minimum, respectivement des impacteurs et de la grille, peut être modifiée.

Ainsi, lorsque la température Tg des gaz d'échappement est supérieure à cette valeur seuil TS2 intermédiaire, les valeurs prédéterminées de puissance maximum et minimum respectivement des impacteurs et de la grille sont abaissées. La puissance maximum Plmax pour les impacteurs, qui est de 100% de la puissance maximum admissible Padl délivrable aux éléments chauffants 45 des impacteurs 46, lorsque la température Tg est inférieure à TS2, est par exemple abaissée à 75% de cette puissance maximum admissible Padl lorsque la température Tg est supérieure à TS2. De même, la puissance minimum Plmin des impacteurs des abaissée de 50 à 40% de cette puissance maximum admissible Padl par exemple. De la même façon, la puissance maximum PGmax de chauffe de la grille est abaissée de 100% à 75 % de la puissance maximum admissible PadG délivrable aux éléments chauffants 47 incorporés dans la grille, et la puissance minimum PGmin est par exemple abaissée de 50 à 40% de cette puissance maximum admissible PadG (étape 142).

Ainsi, lorsque la température Tg mesurée des gaz d'échappement est supérieure à la valeur seuil TS2, les puissances maximum et minimum des impacteurs Plmax, Plmin et de la grille PGmax, PGmax sont fixées, à débit égal, inférieures respectivement aux puissances maximum et minimum déterminées pour une température Tg inférieure à TS2.

Selon la valeur du débit Qg des gaz d'échappement (étapes 150 à 155 déjà décrites), les puissances de chauffe PI et PG, respectivement des impacteurs et de la grille, sont ensuite réglées à une valeur minimum ou maximum préalablement déterminée à l'étape 131 ou 142, en fonction de la température Tg des gaz d'échappement.

Par conséquent, lorsque la température Tg mesurée des gaz d'échappement est basse et proche de TS1 (étape 131) et que le débit Qg estimé des gaz d'échappement est élevé et supérieur à la valeur seuil haute QS2 (étape 155), le jet d'urée injecté est essentiellement projeté sur les parois froides de la chambre de mélange 41 du dispositif mélangeur. Par conséquent, la puissance de chauffe de la grille est réglée sur la puissance maximum PGmax préalablement déterminée en fonction de la température, à l'étape 131. Dans l'exemple, cette puissance PGmax est fixée à 100% de la puissance admissible PadG délivrable aux éléments chauffants 47 intégrés à la grille 44. La puissance de chauffe des impacteurs est quant à elle, réglée sur la puissance minimum PImin préalablement déterminée en fonction de la température, à l'étape 131. Dans l'exemple, cette puissance PImin est fixée à 50% de la puissance admissible Padl délivrable aux éléments chauffants 45 intégrés aux impacteurs 46.

Lorsque la température Tg mesurée des gaz d'échappement est élevée et proche de la valeur seuil supérieure TS3 (étape 142) et que le débit Qg estimé des gaz d'échappement est faible et inférieur à la valeur seuil basse QS1 (étape 150), le jet d'urée injecté est essentiellement projeté sur les impacteurs 46, qui sont à une température élevée (proche de TS3). Par conséquent, dans ce cas, les impacteurs sont chauffés avec une puissance de chauffe maximum PImax préalablement déterminée, à l'étape 142, en fonction de la température (étape 151). La température étant élevée, dans cet exemple, la puissance maximum prédéterminée n'est plus de 100% mais de 75% de la puissance admissible Padl délivrable aux éléments chauffants 45 intégrés aux impacteurs 46 (étape 142). La grille 44, quant à elle, est chauffée avec une puissance minimum PGmin préalablement déterminée, à l'étape 142, en fonction de la température (étape 151). Dans cet exemple, cette puissance PGmin est fixée à 40% de la puissance admissible PadG délivrable aux éléments chauffants 47 intégrés à la grille 44 (étape 142).

Pour affiner encore la régulation de la puissance de chauffe, d'autres valeurs seuils de température intermédiaires peuvent être fixées, afin de définir d'autres plages de température pour lesquelles on détermine des valeurs minimum et maximum de puissance de chauffe respectivement des impacteurs et de la grille.

Grâce au dispositif mélangeur et au système de décomposition de l'urée qui viennent d'être décrits, la solution d'urée injectée est décomposée en agent réducteur (NH3) de manière très efficace quelles que soient les conditions de fonctionnement du moteur, c'est-à-dire quelle que soit la température des gaz d'échappement et leur débit. Des pièces stratégiques du dispositif mélangeur sont chauffées, de manière indépendante, pour s'adapter aux conditions de fonctionnement du moteur et assurer une décomposition optimale de l'urée. Le système permet donc d'améliorer de manière significative la dissociation de l'urée, de réduire de manière significative la quantité d'oxydes d'azote rejetés en sortie de la ligne d'échappement et de réduire l'encrassement de la ligne d'échappement.

## Revendications

1. Dispositif mélangeur (40) destiné à être intégré dans une ligne d'échappement (30) d'un moteur thermique (10), en amont d'un catalyseur de réduction sélective SCR (25), ledit dispositif mélangeur comprenant une chambre de mélange (41), pourvue d'une entrée (E) et d'une sortie (S) pour permettre un écoulement des gaz d'échappement, et un orifice (42), communiquant avec ladite chambre de mélange (41), par lequel est injectée une solution d'urée, sous forme d'un jet projeté sur des impacteurs (46) répartis au sein de ladite chambre de mélange (41), ledit dispositif mélangeur (40) étant **caractérisé en ce qu'**il comprend en outre :
- une grille (44) disposée sur ladite sortie (S) de ladite chambre de mélange (41), et
- des éléments chauffants (45, 47) intégrés respectivement aux impacteurs (46) et à ladite grille (44).

2. Dispositif mélangeur selon la revendication 1, **caractérisé en ce que** les éléments chauffants sont constitués par l'un au moins des moyens suivants : résistances chauffantes, fils chauffants.

3. Système de décomposition d'une solution d'urée en agent réducteur, ledit agent réducteur étant destiné à traiter des oxydes d'azote (NOx) contenus dans les gaz d'échappement d'un moteur thermique, ledit système étant **caractérisé en ce qu'**il comprend :
- un dispositif mélangeur (40) selon l'une des revendications 1 à 2,
- un module de contrôle (50) apte à comparer une température mesurée (Tg) des gaz d'échappement à au moins une première valeur seuil (TS1) et, dès lors que la température mesurée est supérieure à ladite première valeur seuil (TS1), à chauffer, de manière indépendante, les impacteurs (46) et la grille (44) dudit dispositif de mélange (40) avec une puissance modulée en fonction de la température (Tg) mesurée des gaz d'échappement et d'une valeur déterminée du débit (Qg) des gaz d'échappement, la puissance de chauffe (P_{I}) des impacteurs (46) étant augmentée lorsque la température (Tg) mesurée et le débit (Qg) des gaz d'échappement diminuent, et la puissance de chauffe (P_{G}) de la grille (44) étant augmentée lorsque la température (Tg) diminue et que le débit (Qg) des gaz d'échappement augmente.

4. Système selon la revendication 3, **caractérisé en ce que** le module de contrôle (50) est en outre apte à déterminer des valeurs minimum et maximum de puissance de chauffe (P_{Imin}, P_{Imax} ; P_{Gmin}, P_{Gmax}) respectivement des impacteurs (46) et de la grille (44) en fonction de la température (Tg) mesurée, à comparer la valeur du débit (Qg) des gaz d'échappement à au moins une valeur seuil (QS1) et, lorsque le débit (Qg) est inférieur à ladite au moins une valeur seuil (QS1), à régler la puissance (P_{I}) des impacteurs (46) sur la valeur maximum prédéterminée (P_{Imax}) et la puissance de chauffe (P_{G}) de la grille sur la valeur minimum prédéterminée (P_{Gmin}), et inversement lorsque le débit devient supérieur à ladite au moins une valeur seuil (QS1), à régler la puissance de chauffe (P_{I}) des impacteurs (46) sur la valeur minimum prédéterminée (P_{Imin}) et la puissance de chauffe (P_{G}) de la grille (44) sur la valeur maximum prédéterminée(P_{Gmax}).

5. Véhicule automobile comprenant le système de décomposition d'une solution d'urée selon l'une des revendications 3 à 4.

6. Procédé de décomposition d'une solution d'urée au sein d'un dispositif mélangeur intégré dans une ligne d'échappement d'un moteur thermique en amont d'un catalyseur de réduction sélective (SCR), ledit procédé étant caractérisé qu'il est mis en oeuvre avec ledit dispositif mélangeur selon l'une des revendications 1 ou 2, et en ce qu'il comprend les étapes suivantes :
- mesurer une température (Tg) des gaz d'échappement,
- déterminer un débit (Qg) des gaz d'échappement,
- comparer ladite température (Tg) mesurée à au moins une valeur seuil (TS1), et
- lorsque ladite température (Tg) mesurée est supérieure à ladite valeur seuil (TS1), chauffer, de manière indépendante, les impacteurs (46) et la grille (44) dudit dispositif mélangeur avec une puissance modulée en fonction de la température (Tg) mesurée et du débit (Qg) déterminé, la puissance de chauffe (P_{I}) des impacteurs (46) étant augmentée lorsque la température (Tg) et le débit (Qg) diminuent, et la puissance de chauffe (P_{G}) de la grille (44) étant augmentée lorsque la température (Tg) diminue et que le débit (Qg) augmente.

7. Procédé selon la revendication 6, **caractérisé en ce qu'**il comprend en outre les étapes suivantes :
- comparer la température (Tg) mesurée des gaz d'échappement à au moins une deuxième valeur seuil (TS3) supérieure à la première valeur seuil (TS1),
- déterminer des valeurs minimum et maximum de puissance de chauffe (P_{Imin}, P_{Imax} ; P_{Gmin}, P_{Gmax}) respectivement des impacteurs (46) et de la grille (44) dans la plage de températures comprise entre lesdites deux valeurs seuil (TS1 -TS3),
- comparer la valeur de débit (Qg) à au moins une valeur seuil (QS1),
- activer le chauffage des impacteurs (46) et de la grille (44) dès lors que la température (Tg) mesurée est comprise entre lesdites deux valeurs seuils (TS1 et TS3), et
- lorsque le débit (Qg) est inférieur à ladite au moins une valeur seuil (QS1), régler la puissance (P_{I}) des impacteurs (46) sur la valeur maximum (P_{Imax}) prédéterminée et la puissance de chauffe (P_{G}) de la grille sur la valeur minimum (P_{Gmin}) prédéterminée, et inversement lorsque le débit (Qg) devient supérieur à ladite au moins une valeur seuil (QS1), régler la puissance de chauffe (P_{I}) des impacteurs (46) sur la valeur minimum (P_{Imin}) prédéterminée et la puissance de chauffe (P_{G}) de la grille (44) sur la valeur maximum (P_{Gmax}) prédéterminée.

8. Procédé selon l'une des revendications 6 à 7, **caractérisé en ce qu'**il comprend en outre les étapes suivantes :
- comparer la température (Tg) mesurée des gaz d'échappement à au moins une autre valeur seuil (TS2), intermédiaire entre les valeurs seuil (TS1) inférieure et (TS3) supérieure,
- dès lors que la température (Tg) est supérieure à ladite valeur seuil intermédiaire (TS2), abaisser les valeurs prédéterminées minimum et maximum de puissance de chauffe (P_{Imin}, P_{Imax} ; P_{Gmin}, P_{Gmax}) respectivement des impacteurs (46) et de la grille (44).

9. Procédé selon l'une des revendications 6 à 8, **caractérisé en ce qu'**il comprend en outre les étapes suivantes :
- comparer la valeur de débit (Qg) à au moins deux valeurs seuil basse (QS1), et haute (QS2) telles que QS1<QS2, et
- dès lors que le débit (Qg) est inférieur à ladite valeur seuil basse (QS1), la puissance de chauffe (P_{I}) des impacteurs (46) est réglée sur la valeur maximum (P_{Imax}) préalablement déterminée en fonction de la température (Tg) mesurée, tandis que la puissance de chauffe (P_{G}) de la grille (44) est réglée sur la valeur minimum (P_{Gmin}) préalablement déterminée en fonction de la température (Tg) mesurée,
- dès lors que le débit (Qg) est supérieur à ladite valeur seuil haute (QS2), la puissance de chauffe (P_{I}) des impacteurs (46) est réglée sur la valeur minimum (P_{Imin}) préalablement déterminée en fonction de la température (Tg) mesurée, tandis que la puissance de chauffe (P_{G}) de la grille (44) est réglée sur la valeur maximum (P_{Gmax}) préalablement déterminée en fonction de la température (Tg) mesurée,
- lorsque le débit est intermédiaire entre les deux valeurs seuils (QS1 et QS2), les puissances de chauffe (P_{I}, P_{G}) des impacteurs (46) et de la grille (44) sont respectivement réglées sur une valeur supérieure ou égale à la valeur minimum (P_{Imin}, P_{Gmin}) préalablement déterminée en fonction de la température (Tg) mesurée.

10. Programme d'ordinateur comprenant des instructions de code de programme pour l'exécution des étapes du procédé de décomposition d'une solution d'urée selon l'une des revendications 6 à 9, lorsque ledit programme est exécuté par un processeur (50).

## Patentansprüche

1. Mischvorrichtung (40), die dazu bestimmt ist, in einen Abgasstrang (30) einer Brennkraftmaschine (10) stromaufwärts eines Katalysators zur selektiven Reduktion SCR (25) integriert zu sein, wobei die Mischvorrichtung eine Mischkammer (41) umfasst, die mit einem Eingang (E) und einem Ausgang (S) versehen ist, um ein Fließen der Abgase zu erlauben, und eine Öffnung (42), die mit der Mischkammer (41) in Verbindung steht, durch die eine Harnstofflösung in Form eines Strahls auf Impaktoren (46), die innerhalb der Mischkammer (41) verteilt sind, projiziert wird, Mischvorrichtung (40) **dadurch gekennzeichnet, dass** sie außerdem Folgendes umfasst:
- ein Gitter (44), das auf dem Ausgang (S) der Mischkammer (41) angeordnet ist, und
- Heizelemente (45, 47), die jeweils in die Impaktoren (46) und in das Gitter (44) eingebaut sind.

2. Mischvorrichtung nach Anspruch 1, **dadurch gekennzeichnet, dass** die Heizelemente aus einem der folgenden Mittel bestehen: Heizwiderstände und/oder Heizleiter.

3. System zur Zersetzung einer Harnstofflösung als Reduktionsmittel, wobei das Reduktionsmittel dazu bestimmt ist, Stickstoffoxide (NOx), die in den Abgasen einer Brennkraftmaschine enthalten sind, zu behandeln, System **dadurch gekennzeichnet, dass** es Folgendes umfasst:
- eine Mischvorrichtung (40) nach einem der Ansprüche 1 bis 2,
- ein Steuermodul (50), das geeignet ist, um eine gemessene Temperatur (Tg) der Abgase mit mindestens einem ersten Schwellenwert (TS1) zu vergleichen, und, sofern die gemessene Temperatur höher ist als der erste Schwellenwert (TS1), unabhängig die Impaktoren (46) und das Gitter (44) der Mischvorrichtung (40) mit einer Leistung zu heizen, die in Abhängigkeit von der gemessenen Temperatur (Tg) der Abgase und einem bestimmten Durchflusswert (Qg) der Abgase moduliert wird, wobei die Heizleistung (P_{I}) der Impaktoren (46) erhöht wird, wenn die gemessene Temperatur (Tg) und der Durchsatz (Qg) der Abgase sinken, und die Heizleistung (P_{G}) des Gitters (44) erhöht wird, wenn die Temperatur (Tg) sinkt und der Durchsatz (Qg) der Abgase steigt.

4. System nach Anspruch 3, **dadurch gekennzeichnet, dass** das Steuermodul (50) außerdem geeignet ist, um Mindest- und Höchst-Heizleistungswerte (P_{Imin}, P_{Imax}; P_{Gmin}, P_{Gmax}) jeweils der Impaktoren (46) und des Gitters (44) in Abhängigkeit von der gemessenen Temperatur (Tg) zu bestimmen, den Durchsatzwert (Qg) der Abgase mit mindestens einem Schwellenwert (QS1) zu vergleichen, und, wenn der Durchsatz (Qg) niedriger ist als der mindestens eine Schellenwert (QS1), die Leistung (P_{I}) der Impaktoren (46) auf den vorbestimmten Höchstwert (P_{Imax}) und die Heizleistung (P_{G}) des Gitters auf den vorbestimmten Mindestwert (P_{Gmin}) einzustellen, und umgekehrt, wenn der Durchsatz größer wird als der mindestens eine Schwellenwert (QS1), die Heizleistung (P_{I}) der Impaktoren (46) auf den vorbestimmten Mindestwert (P_{Imin}) und die Heizleistung (P_{G}) des Gitters (44) auf den vorbestimmten Höchstwert (P_{Gmax}) einzustellen.

5. Kraftfahrzeug, das das System zur Zersetzung einer Harnstofflösung nach einem der Ansprüche 3 bis 4 umfasst.

6. Verfahren zur Zersetzung einer Harnstofflösung innerhalb einer Mischvorrichtung, die in einen Abgasstrang einer Brennkraftmaschine stromaufwärts eines Katalysators zur selektiven Reduktion (SCR) integriert ist, Verfahren **dadurch gekennzeichnet, dass** es mit der Mischvorrichtung nach einem der Ansprüche 1 oder 2 umgesetzt wird, und dass es die folgenden Schritte umfasst:
- Messen einer Temperatur (Tg) der Abgase,
- Bestimmen eines Durchsatzes (Qg) der Abgase,
- Vergleichen der gemessenen Temperatur (Tg) mit mindestens einem Schwellenwert (TS1), und
- wenn die gemessene Temperatur (Tg) höher ist als der Schwellenwert (TS1), unabhängiges Erhitzen der Impaktoren (46) und des Gitters (44) der Mischvorrichtung mit einer Leistung, die in Abhängigkeit von der gemessenen Temperatur (Tg) und dem bestimmten Durchsatz (Qg) moduliert wird, wobei die Heizleistung (P_{I}) der Impaktoren (46) erhöht wird, wenn die Temperatur (Tg) und der Durchsatz (Qg) sinken, und die Heizleistung (P_{G}) des Gitters (44) erhöht wird, wenn die Temperatur (Tg) sinkt und der Durchsatz (Qg) zunimmt.

7. Verfahren nach Anspruch 6, **dadurch gekennzeichnet, dass** es außerdem folgende Schritte umfasst:
- Vergleichen der gemessenen Temperatur (Tg) der Abgase mit mindestens einem zweiten Schwellenwert (TS3), der höher ist als der erste Schwellenwert (TS1),
- Bestimmen der Mindest- und Höchst-Heizleistungswerte (P_{Imin}, P_{Imax}; P_{Gmin}, P_{Gmax}) jeweils der Impaktoren (46) und des Gitters (44) in dem Bereich von Temperaturen, der zwischen den zwei Schwellenwerten (TS1 - TS3) liegt,
- Vergleichen des Durchsatzwerts (Qg) mit mindestens einem Schwellenwert (QS1),
- Aktivieren der Heizung der Impaktoren (46) und des Gitters (44), sofern die gemessene Temperatur (Tg) zwischen den zwei Schwellenwerten (TS1 und TS3) liegt, und
- wenn der Durchsatz (Qg) niedriger ist als der mindestens eine Schwellenwert (QS1), Einstellen der Leistung (P_{I}) der Impaktoren (46) auf den vorbestimmten Höchstwert (P_{Imax}) und der Heizleistung (P_{G}) des Gitters auf den vorbestimmten Mindestwert (P_{Gmin}), und umgekehrt, wenn der Durchsatz (Qg) größer wird als mindestens eine Schwellenwert (QS1), Einstellen der Heizleistung (P_{I}) der Impaktoren (46) auf den vorbestimmten Mindestwert (P_{Imin}) und der Heizleistung (P_{G}) des Gitters (44) auf den vorbestimmten Höchstwert (P_{Gmax}).

8. Verfahren nach einem der Ansprüche 6 bis 7, **dadurch gekennzeichnet, dass** es außerdem die folgenden Schritte umfasst:
- Vergleichen der gemessenen Temperatur (Tg) der Abgase mit mindestens einem anderen Schwellenwert (TS2), der zwischen dem unteren Schwellenwert (TS1) und dem oberen Schwellenwert (TS3) liegt,
- sofern die Temperatur (Tg) höher ist als der Zwischenschwellenwert (TS2), Senken der vorbestimmten Mindest- und Höchst-Heizleistungswerte (P_{Imin}, P_{Imax}; P_{Gmin}, P_{Gmax}) jeweils der Impaktoren (46) und des Gitters (44).

9. Verfahren nach einem der Ansprüche 6 bis 8, **dadurch gekennzeichnet, dass** es außerdem die folgenden Schritte umfasst:
- Vergleichen des Durchsatzwerts (Qg) mit mindestens zwei unteren Schwellenwerten (QS1) und oberen Schwellenwerten (QS2) derart, dass QS1<QS2 ist, und
- sofern der Durchsatz (Qg) kleiner ist als der untere Schwellenwert (QS1), Einstellen der Heizleistung (P_{I}) der Impaktoren (46) auf den zuvor in Abhängigkeit von der gemessenen Temperatur (Tg) bestimmten Höchstwert (P_{Imax}), während die Heizleistung (P_{G}) des Gitters (44) auf den zuvor in Abhängigkeit von der gemessenen Temperatur (Tg) bestimmten Mindestwert (P_{Gmin}) eingestellt wird,
- sofern der Durchsatz (Qg) höher ist als der obere Schwellenwert (QS2), Einstellen der Heizleistung (P_{I}) der Impaktoren (46) auf den zuvor in Abhängigkeit von der gemessenen Temperatur (Tg) bestimmten Mindestwert (P_{Imin}), während die Heizleistung (P_{G}) des Gitters (44) auf den zuvor in Abhängigkeit von der gemessenen Temperatur (Tg) eingestellten Höchstwert (P_{Gmax}) eingestellt wird,
- sofern der Durchsatz zwischen den zwei Schwellenwerten (QS1 und QS2) liegt, Einstellen der Heizleistungen (P_{I}, P_{G}) jeweils der Impaktoren (46) und des Gitters (44) auf einen Wert, der größer oder gleich dem zuvor in Abhängigkeit von der gemessenen Temperatur (Tg) bestimmten Mindestwert (P_{Imin}, P_{Gmin}) ist.

10. Computerprogramm, das Programmcodeanweisungen zur Ausführung der Schritte des Verfahrens zur Zerlegung einer Harnstofflösung nach einem der Ansprüche 6 bis 9 umfasst, wenn das Programm von einem Prozessor (50) ausgeführt wird.

## Claims

1. A mixing device (40) intended to be integrated into an exhaust line (30) of a heat engine (10), upstream of a selective reduction catalyst SCR (25), said mixing device including a mixing chamber (41), provided with an inlet (E) and an outlet (S) to permit a flow of the exhaust gases, and an orifice (42), communicating with said mixing chamber (41), through which a urea solution is injected, in the form of a jet projected on impactors (46) distributed within said mixing chamber (41), said mixing device (40) being **characterized in that** it includes in addition:
- a grid (44) disposed on said outlet (S) of said mixing chamber (41), and
- heating elements (45, 47) integrated respectively to the impactors (46) and to said grid (44).

2. The mixing device according to Claim 1, **characterized in that** the heating elements are constituted by at least one of the following means: heating resistors, heating wires.

3. A system for decomposing a urea solution in reducing agent, said reducing agent being intended to process nitrogen oxides (NOx) contained in the exhaust gases of a heat engine, said system being **characterized in that** it includes:
- a mixing device (40) according to one of Claims 1 to 2,
- a control module (50) able to compare a measured temperature (Tg) of the exhaust gases to at least a first threshold value (TS1) and, as soon as the measured temperature is greater than said first threshold value (TS1), to heat, in an independent manner, the impactors (46) and the grid (44) of said mixing device (40) with a modulated power as a function of the measured temperature (Tg) of the exhaust gases and of a specified value of the flow (Qg) of the exhaust gases, the heating power (P_{I}) of the impactors (46) being increased when the measured temperature (Tg) and the flow (Qg) of the exhaust gases reduce, and the heating power (P_{G}) of the grid (44) being increased when the temperature (Tg) reduces and the flow (Qg) of the exhaust gases increases.

4. The system according to Claim 3, **characterized in that** the control module (50) is, in addition, able to determine minimum and maximum values of heating power (P_{Imin}, P_{Imax}; P_{Gmin}, P_{Gmax}) respectively of the impactors (46) and of the grid (44) as a function of the measured temperature (Tg), to compare the value of the flow (Qg) of the exhaust gases to at least one threshold value (QS1) and, when the flow (Qg) is less than said at least one threshold valve (QS1), to regulate the power (P_{I}) of the impactors (46) on the maximum predetermined value (P_{Imax}) and the heating power (P_{G}) of the grid on the minimum predetermined value (P_{Gmin}), and conversely when the flow becomes greater than said at least one threshold value (QS1), to regulate the heating power (P_{I}) of the impactors (46) on the predetermined minimum value (P_{Imin}) and the heating power (P_{G}) of the grid (44) on the maximum predetermined value (P_{Gmax}) .

5. A motor vehicle including the system for decomposing a urea solution according to one of Claims 3 to 4.

6. A method for decomposing a urea solution within a mixing device integrated into an exhaust line of a heat engine upstream of a selective reduction catalyst (SCR), said method being **characterized in that** it is implemented with said mixing device according to one of Claims 1 or 2, and **in that** it includes the following steps:
- measuring a temperature (Tg) of the exhaust gases,
- determining a flow (Qg) of the exhaust gases,
- comparing said measured temperature (Tg) to at least one threshold value (TS1), and
- when said measured temperature (Tg) is greater than said threshold value (TS1), heating, in an independent manner, the impactors (46) and the grid (44) of said mixing device with a modulated power as a function of the measured temperature (Tg) and of the determined flow (Qg), the heating power (P_{I}) of the impactors (46) being increased when the temperature (Tg) and the flow (Qg) reduce, and the heating power (P_{G}) of the grid (44) being increased when the temperature (Tg) reduces and the flow (Qg) increases.

7. The method according to Claim 6, **characterized in that** it includes in addition the following steps:
- comparing the measured temperature (Tg) of the exhaust gases to at least one second threshold value (TS3) greater than the first threshold value (TS1),
- determining minimum and maximum values of heating power (P_{Imin}, P_{Imax}; P_{Gmin}, P_{Gmax}) respectively of the impactors (46) and of the grid (44) in the range of temperatures comprised between said two threshold values (TS1-TS3),
- comparing the flow value (Qg) to at least one threshold value (QS1),
- activating the heating of the impactors (46) and of the grid (44) as soon as the measured temperature (Tg) is comprised between said two threshold values (TS1 and TS3), and
- when the flow (Qg) is less than said at least one threshold value (QS1), regulating the power (P_{I}) of the impactors (46) on the predetermined maximum value (P_{Imax}) and the heating power (P_{G}) of the grid on the predetermined minimum valve (P_{Gmin}), and conversely when the flow (Qg) becomes greater than said at least one threshold value (QS1), regulating the heating power (P_{I}) of the impactors (46) on the predetermined minimum value (P_{Imin}) and the heating power (P_{G}) of the grid (44) on the predetermined maximum value (P_{Gmax}).

8. The method according to one of Claims 6 to 7, **characterized in that** it includes in addition the following steps:
- comparing the measured temperature (Tg) of the exhaust gases to at least one other threshold value (TS2), intermediate between the lower threshold value (TS1) and the upper threshold value (TS3),
- as soon as the temperature (Tg) is greater than said intermediate threshold value (TS2), lowering the predetermined minimum and maximum values of heating power (P_{Imin}, P_{Imax}; P_{Gmin}, P_{Gmax}) respectively of the impactors (46) and of the grid (44).

9. The method according to one of Claims 6 to 8, **characterized in that** it includes in addition the following steps:
- comparing the flow value (Qg) to at least two low threshold values (QS1), and high threshold values (QS2) such as QS1<QS2, and
- as soon as the flow (Qg) is less than said low threshold value (QS1), the heating power (P_{I}) of the impactors (46) is regulated on the maximum value (P_{Imax}) previously determined as a function of the measured temperature (Tg), while the heating power (P_{G}) of the grid (44) is regulated on the minimum value (P_{Gmin}) previously determined as a function of the measured temperature (Tg),
- as soon as the flow (Qg) is greater than said high threshold value (QS2), the heating power (P_{I}) of the impactors (46) is regulated on the minimum value (P_{Imin}) previously determined as a function of the measured temperature (Tg), while the heating power (P_{G}) of the grid (44) is regulated on the maximum value (P_{Gmax}) previously determined as a function of the measured temperature (Tg),
- when the flow is intermediate between the two threshold values (QS1 and QS2), the heating powers (P_{I}, P_{G}) of the impactors (46) and of the grid (44) are respectively regulated on a value greater than or equal to the minimum value (P_{Imin}, P_{Gmin}) previously determined as a function of the measured temperature (Tg).

10. A computer program including program code instructions for the execution of the steps of the method for decomposing a urea solution according to one of Claims 6 to 9, when said program is executed by a processor (50) .
